# EUROPEAN PATENT SPECIFICATION

(11) **EP 3 434 753 B1**
(45) Date of publication and mention of the grant of the patent: **04.08.2021**
(21) Application number: 18185183.3
(22) Date of filing: 24.07.2018
(51) Int. Cl.: C10J 3/00, C01B 3/34, C10K 3/04

(54) **PROCESS FOR THE PRODUCTION OF METHANE FROM REFUSE-DERIVED FUEL**
VERFAHREN ZUR HERSTELLUNG VON METHAN AUS ABGELAGERTEM BRENNSTOFF
PROCÉDÉ DE PRODUCTION DE MÉTHANE À PARTIR DE COMBUSTIBLE DÉRIVÉ

(30) Priority: 27.07.2017 IT 201700086210
(43) Date of publication of application: 30.01.2019
(73) Proprietor: ENEA - Agenzia Nazionale Per Le Nuove Tecnologie, L'Energia e Lo Sviluppo Economico Sostenibile, 00196 Roma (IT)
(72) Inventor: TOSTI, Silvano, 00044 Frascatio (RM) (IT); BUCETI, Giuliano, 00044 Frascati (RM) (IT); POZIO, Alfonso, 00123 Roma (IT)
(74) Representative: Currado, Luisa

(56) References cited:
- WO-A1-00/21911
- WO-A1-2008/097691
- US-A- 4 822 935
- US-A1- 2006 219 403
- US-A1- 2009 090 054
- US-A1- 2010 024 298

## Description

### Background of the invention

The present invention relates to the chemistry sector and more specifically to a process for the production of methane starting from refuse-derived fuel by a hydrogasification process in the presence of hydrogen only.

### State of the art

The term "gasification" indicates the processes that, starting from materials containing carbon, produce synthesis gas, a mixture comprising mainly of carbon monoxide (CO) and hydrogen (H₂) and normally indicated as syngas. This gas can be used to generate electricity or steam, or also, in the chemical industry, as a starting material to produce other chemical compounds or hydrogen.

Among the gasification processes, of note is the Fisher-Tropsch synthesis used to obtain chemical products and energy vectors. Important examples were put in place during the Second World War when Germany produced liquid fuels in this way, and during the time of apartheid, when the Republic of South Africa covered its need for fuels and other chemical products by means of coal gasification.

Among these processes, a particular case consists of hydrogasification, which consists of treating organic compounds (CO₂, carbon, biomasses, etc.) with hydrogen to produce hydrocarbons and alcohols, for example methane. In the initial decades of the 20^{th} century, the hydrogen needed for hydrogasification was produced from coal and the gasification process included partial oxidation and reforming of coal, combined with the water-gas shift reaction. Currently, most of the hydrogen, over 75%, is produced from methane reforming, which has been found to be the most advantageous process.

Italian patent application No. 1379185 filed on 9 August 2007 describes the use of hydrogen to produce methane through a reaction with CO₂ (Sabatier reaction). A similar process was experimented within the scope of a collaboration between the Fraunhofer Institute for Wind Energy & Energy System Technology (Fraunhofer IWES) and the Center for Solar Energy and Hydrogen Research Baden-Württemberg (ZSW). In addition, the process called "Green Freedom" comprised capturing and recovering carbon dioxide from the atmosphere, producing hydrogen starting from water electrolysis and causing the reaction between hydrogen and carbon dioxide to produce fuels and other organic products (hydrocarbons, alcohols, etc.) (.J. Martin, W.L. Kubic, Green Freedom, A concept for producing carbon-neutral synthetic fuels and chemicals, Report LA-UR-07-7897 Los Alamos Laboratory, Nov. 2007 - http://www.lanl.gov/news/newsbulletin/pdf/Green_Freedom_Overview.p df) .

A British company, Air Fuel Synthesis of Stockton-on-Tees, has looked into the production of gasoline using carbon dioxide and hydrogen produced by water electrolysis (http://www.airfuelsynthesis.com/) .

Italian patent no. 1416022 filed on 27 December 2012 describes a process for the production of methane by coal hydrogasification. The hydrogen necessary for the hydrogasification process is preferably produced starting from renewable sources, such as wind or solar. The application of the process described in Italian patent no. 1416022 is described in S. Tosti, A. Pizzuto, A. Pozio, Carbone ed eolico per produrre metano - Idrogassificazione del carbone del Sulcis, ICP Rivista dell'Industria Chimica, Year XL, October 2013, number 10, 64-68; S. Tosti, G. Spazzafumo, D. Capobianco, G. Buceti, A. Pozio, S. Bartucca, EU scenarios of renewable coal hydro-gasification for SNG production, Sustainable Energy Technologies and Assessments 16, 2016, 43-52).

The US patent application, publication no. US2013/0023707, describes wood residues treated in a pyrolysis process and the resulting gaseous flow converted into hydrocarbons by hydrogasification and steam reforming combined.

US Patent no. US4822935 and US patent application no. US2010/0251615 describe the pyrolysis of biomasses in a hydrogen atmosphere (hydropyrolysis).

US Patent no. US4152122 describes a process comprising hydrogasification with syngas (H₂, CO, etc.) produced upstream by a gasifier where biomasses are treated with oxygen.

US Patent no. US7619012 and US patent application publication No. US20050032920 describe a process operating in parallel in two stages, in which in one stage the combination of hydrogasification with the steam reforming of organic matrices takes place and in the other stage steam pyrolysis takes place to produce additional hydrogen used in the first stage.

In all prior art processes described above, the carbonaceous matrix is always treated in one or more stages comprising hydrogasification together with steam reforming, i.e. the use of hydrogen together with water vapour, hence air and water, or hydrogasification takes place in the presence of oxygen.

Refuse-derived fuel (RDF) is a type of fuel derived from the processing, for example selection, comminuting and drying, of municipal waste, and it consists mainly of plastics and biodegradable substances, said term is broadly recognised by the scientific community and by the competent authorities; by way of example, the definition is provided by Standard for the production and use of Refuse Derived Fuel, EPA Report, ISBN 978-1-921495-07-6, February 2010, and by European Committee for Standardization, CEN/TC 343, Solid Recovered Fuels (https://standards.cen.eu/dyn/www/f?p=204:110:0::::FSP_PROJECT,FSP _ORG_ID:28975,407430&cs=11F595078DCD7B8535BD0EB30EBD4F625), but it is cited in other national and supranational standards.

Generally, refuse-derived fuel is in the form of small shredded sheets, similar to confetti, that can be pressed to form bales with weight from approximately 500 to 1000 kg normally wound with a polyethylene film. Alternatively, refuse-derived fuel can be in compacted form and in this case it can be in the form of pellets or grains.

The chemical-physical characteristics of refuse-derived fuel can vary widely according to the matrices of origin, for example, non-hazardous municipal waste, special waste, etc. and to the type of pre-treatments performed, such as the removal of recyclable and hazardous materials, removal of non-combustible materials like glass and metals, etc. Current national standards consider the different characteristics of refuse-derived fuel, identifying different commercial categories and hence different possibilities of use or disposal. Normally, refuse-derived fuel is treated by incineration, or waste-to-energy processes, or by gasification. In incinerators, refuse-derived fuel is burned with air to produce carbon dioxide and heat which in turn can be used to produce electricity. Moreover, refuse-derived fuel can be burned together with coal in thermal plants or used in the combustion furnaces of cement plants and of other factories.

The most important drawback of incineration consists of the formation of toxic compounds which are then released in the environment, mainly dioxins, such as PCDD - polychlorinated dibenzo-p-dioxins and furans like PCDF polychlorinated dibenzofurans (Gordon McKay, Dioxin characterisation, formation and minimisation during municipal solid waste (MSW) incineration: review, Chemical Engineering Journal 86 (2002) 343-368). Dioxins are formed in the combustion with oxygen of plastics and other chlorinated compounds, like PVC, in the presence of metal particulates acting as catalysts. In gasification processes, refuse-derived fuel is treated at temperatures of 800-1000°C using air and/or steam and otherwise operating with sub-stoichiometric oxygen (Wilson, Comparative Assessment of Gasification and Incineration in Integrated Waste Management Systems, http://www.eprenewable.com/uploads/files/63_5_Gasification White_ Paper_10-08-2014.pdf).

The gasification of refuse-derived fuel, compared with its incineration, is advantageous because there is a reduced formation of sulphur oxides, nitrogen oxides and dioxins; in addition, residual moisture and steam can be converted into hydrogen increasing the calorific value of the syngas produced.

Limits for dioxin emissions are established. The standard introduces a parameter (I-TEQ, International Toxicity Equivalent) able to standardise the degree of toxicity of the different dioxin molecules. Generally, the limit set in Europe (and in Japan) equal to 0.1 ng I-TEQ/m³ is complied with by the refuse-derived fuel gasification plants that operate under normal conditions (U. Arena, Process and technological aspects of municipal solid waste gasification. A review, Waste Management 32 (2012) 625-639).

Although waste-to-energy plants and refuse-derived fuel gasification plants are able to comply with the aforesaid parameters for dioxin emissions, they are poorly accepted due to environmental impact questions.

In addition, International patent application no. WO2009046252 describes a process and the related reactor for the hydrogasification of coal and carbonaceous materials that uses flows of a carrier gas like nitrogen, hydrogen, CO and mixtures thereof together with water vapour.

International patent application no. WO2011038046 and the US patent application publication no. US2011126458 describe hydrogasification processes in the presence of steam.

US Patent no. US3891403 describes oil shale hydrogasification.

US Patent no. US4152122 describes the treatment of waste by reaction with synthesis gas to produce methane.

US Patent no. US3891404 describes heavy oil hydrogasification.

South African patent no. ZA7302075 describes the hydrogasification of carbon-based materials, in the presence of a gas containing hydrogen, synthesis gas.

US application publication no. US2010285576 describes the hydrogasification process for the treatment of algae and coal.

Chinese patents no. CN105400548, CN105462618, CN102559310 describe hydrogasification for the treatment of coal.

All patent documents known in the art, described hitherto, do not pertain to the specific treatment of refuse-derived fuel and hydrogasification is carried out in the presence of steam and/or air or other gaseous mixtures that also contain hydrogen.

The prior art closest to the present invention can be considered the international patent application no. WO2008/097691 which describes a process for producing methane from coal, originating from fossil fuels, in particular coal and bio-fuel, and water that comprises the steps of water electrolysis and carbon hydrogasification to produce methane, in which hydrogasification takes place in the presence of oxygen; the related hydrogasification reactor is fed by a flow of oxygen specifically inserted to maintain the desired temperature. The process described by WO2008/097691 is characterised in that the source of carbon is coal and bio-fuel and that hydrogasification takes place in the presence of oxygen.

A further closest prior art can be considered the US patent application, publication no. US2009/090054 disclosing a reactor and method for hydro-gasification of carbonaceous material in the presence of hydrogen not being obtained by electrolysis of water wherein the carbonaceous material is supplied by a carrier gas (e.g. CO2, N2, H2, or a combination thereof) and the carbonaceous material is coal.

### Technical problem

In the sector of ecosustainable energy, there is a marked need to obtain hydrogen at low cost from renewable sources, for example wind and/or photovoltaic. This would allow to reconsider the possibility of producing methane by the hydrogasification process.

This would additionally allow to store chemical energy from these energy sources, which by their nature are characterised by a variability of production, which does not allow their continuous and complete insertion into the electrical grid. Hence, chemical energy would represent an effective method of storing the excess energy produced by these sources and not accumulable, which can be used to produce hydrogen by water electrolysis. The accumulated chemical energy has high conversion efficiency.

However, a method for producing hydrogen is necessary that overcomes known disadvantages, such as limited environmental sustainability because to date it is mainly produced by fossil fuels.

The inventors of the present invention have devised a process for storing electric energy, for example from renewable sources, passing through hydrogen, in the form of methane which is widely used in energy applications.

In addition, methane is produced starting from refuse-derived fuels, which, therefore, are the sole source of carbon in the process of the present invention.

Furthermore, the process of the present invention allows to reduce the dioxin emissions of common waste-to-energy and refuse-derived fuel gasification processes.

The technical problem is therefore solved providing a process for producing methane from refuse-derived fuel by hydrogasification in the presence of hydrogen-only atmosphere, hence in the absence of air, water or other gaseous mixtures.

### Object of the invention

With reference to the attached claims, the technical problem is therefore solved providing a process for the production of methane from carbon from refuse-derived fuel and water comprising the following steps:
a) electrolysis of water to form hydrogen and oxygen;
b) hydro-gasification of carbon from refuse-derived fuel in the presence of hydrogen only, without adding air and/or oxygen and/or water, to obtain methane conducted at a pressure comprised between 1 and 50 bar and a temperature comprised between 300 and 500 °C.

Alternatively, step a) is replaced by step a') wherein hydrogen is produced from carbon from organic compounds by reforming in the presence of water vapour and/or partial oxidation in the presence of oxygen or air in combination with water-gas shift reaction.

In one alternative, the process comprises the following steps in addition to steps a) and b):
c) partial combustion of carbon, in the presence of oxygen to produce carbon monoxide;
d) carbon monoxide product of step c) undergoes to water-gas shift reaction to form hydrogen and carbon dioxide;
wherein the hydrogen obtained in step d) can be partially or totally recycled in step b)

In an additional alternative, the process comprises in addition to steps a) and b), the step e) in which oxy-combustion of carbon takes place with the oxygen produced in step a) to obtain carbon dioxide.

In an additional alternative, the carbon dioxide produced in step e) reacts in step f) with hydrogen produced in step a) to obtain methane and water by the Sabatier reaction.

Further features of the present invention will be clear from the following detailed description with reference to the accompanying figure and to the experimental tests provided.

### Brief description of the figures

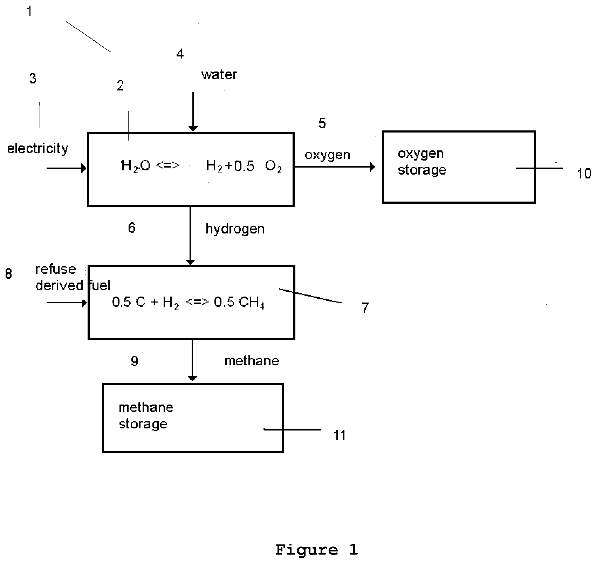

Figure 1 shows a schematic representation of an exemplary plant for hydrogasification.

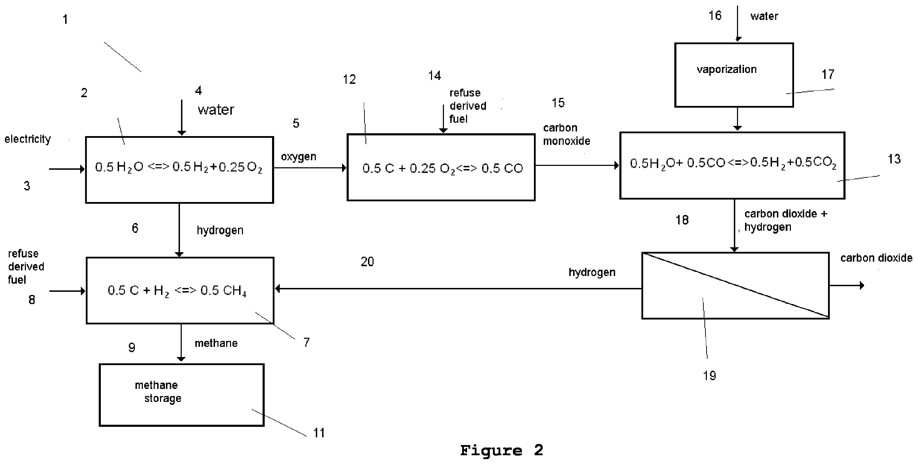

Figure 2 shows a schematic representation of an exemplary plant in which hydrogasification can be coupled with the reactions of partial oxidation and water-gas shift.

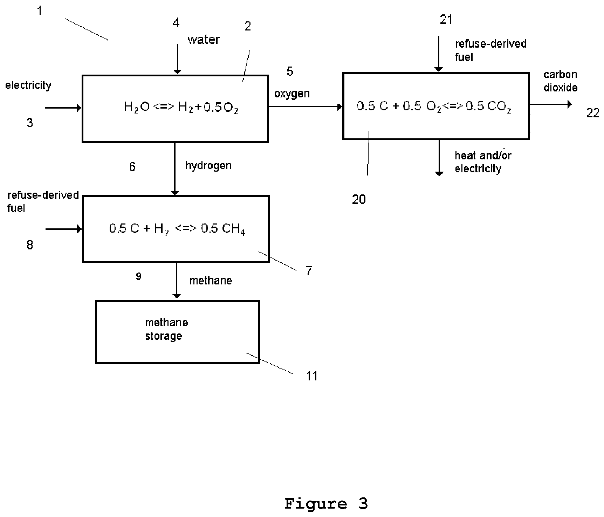

Figure 3 shows a schematic representation of an exemplary plant in which hydrogasification can be coupled with the oxy-combustion reaction.

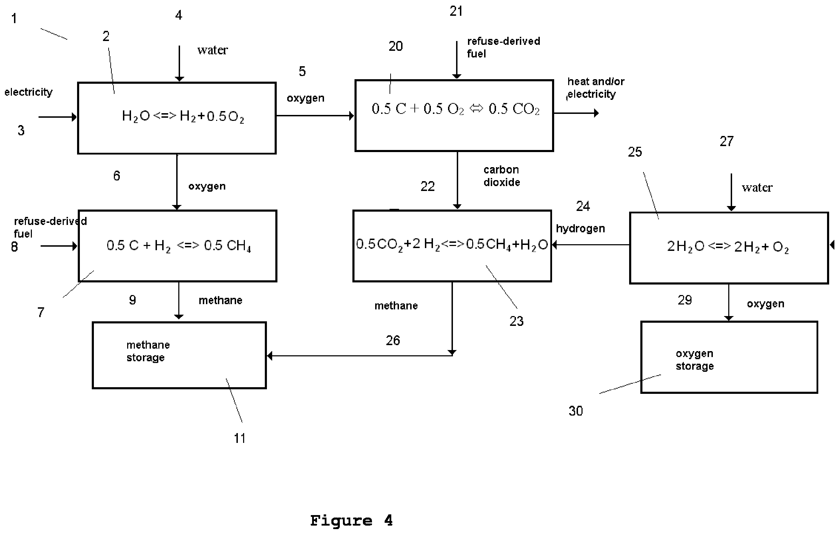

Figure 4 shows a schematic representation of an exemplary plant in which hydrogasification can be coupled with the oxy-combustion reaction and the Sabatier reaction, provided with two electrolytic cells.

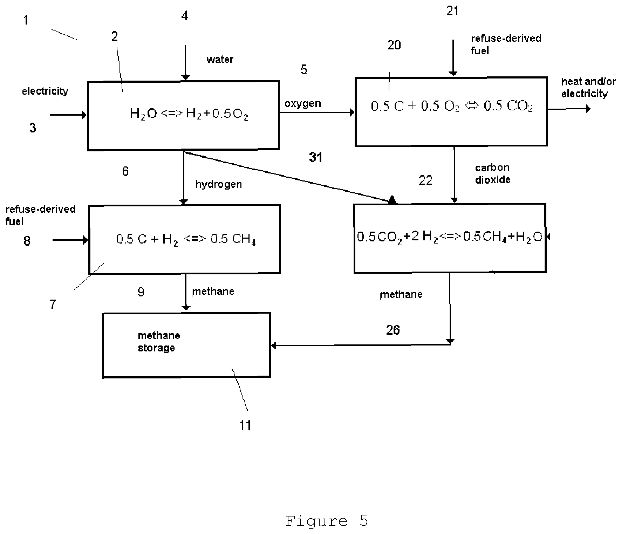

Figure 5 shows a schematic representation of an exemplary plant in which hydrogasification can be coupled with the oxy-combustion reaction and the Sabatier reaction, provided with only one electrolytic cell.

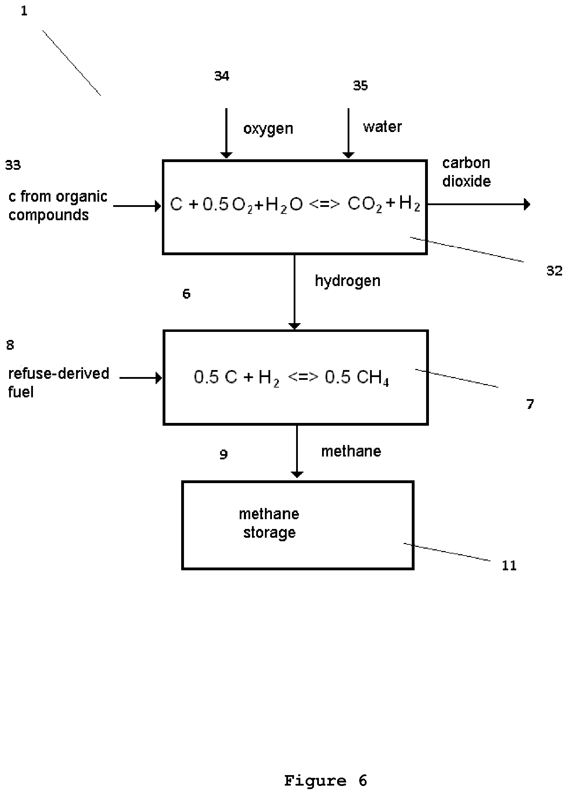

Figure 6 shows a schematic representation of an exemplary plant in which hydrogasification can be carried out with hydrogen produced by reforming and/or partial oxidation of organic compounds.
Figure 7 shows in graphic form the methane yield and the methane concentration on water-less base in the flow of the reaction products for different temperatures at the pressure of 10 bar.
Figure 8 shows in graphic form the concentration on water-less base of some reaction products for different temperatures operating at 10 bar.
Figure 9 shows in graphic form the methane yield and methane concentration on water-less base in the flow of the reaction products for different pressures at the temperature of 300°C.
Figure 10 shows in graphic form the concentration on water-less base of some reaction products for different pressures operating at 300°C.

### Detailed description of the invention

### Definitions

Within the meaning of the present invention, refuse-derived fuel means fuel obtained from the chemical-physical treatment of municipal solid waste eliminating the organic fractions and the non-combustible elements from the waste, whose composition is highly variable according to the nature of the waste from which it derives. Refuse-derived fuel is also defined by the acronym RDF (refuse-derived fuel) or SSF (secondary solid fuel).

A definition of RDF was contained in Article 183 of Legislative Decree no. 152/2006) which in Paragraph 1 Letter r set forth "refuse-derived fuel (RDF) : the fuel that is classifiable, on the basis of the technical standards UNI 9903-1 as amended, with RDF of normal quality, that is recovered from municipal and special non-hazardous waste by treatments directed at assuring adequate calorific value for its use, and at reducing and controlling: 1) the environmental and health risk; 2) the presence of metallic material, glasses, inerts, putrescible material and the moisture content; 3) the presence of hazardous substances, in particular for the purposes of combustion". In paragraph 1 letter s): "high quality refuse-derived fuel (RDF-Q): the fuel that is classifiable, on the basis of the technical standards UNI 9903-1 as amended, as high quality RDF, to which Article 229 applies". Legislative Decree no. 205/2010, which revised and updated the previous regulation, provides the definition of secondary solid fuel (SSF) in Article 10: the solid fuel produced from waste that complies with the classification and specification characteristics identified by the technical standards UNI CEN/TS 15359 as amended; subject to the application of Article 184-ter, secondary solid fuel is classified as special waste. By way of example, Table 1 below shows an example of composition of refuse-derived fuel, described in Vounatsos et al., Characterization and classification of Refuse Derived Fuel in the Materials Recovery - Facility of EPANA S.A., http://ec.europa.eu/environment/life/project/Projects/index.cfm?fu seaction=home.showFile&rep=file&fil=ENERGY_WASTE_CERTH_2012_pres.p df.

**Table 1**

| | conc. (% by weight) |
|---|---|
| C | 55.26 |
| H | 7.21 |
| N | 1.32 |
| S | 0.25 |
| O | 35.53 |
| Cl | 0.43 |

Additional definitions were provided by United States Environmental Protection Agency, in Standard for the production and use of Refuse Derived Fuel, EPA Report, ISBN 978-1-921495-07-6, February 2010, e da European Committee for Standardization, in CEN/TC 343, Solid Recovered Fuels (https://standards.cen.eu/dyn/www/f?p=204:110:0::::FSP_PROJECT,FSP _ORG_ID:28975,407430&cs=11F595078DCD7B8535BD0EB30EBD4F625).

A further definition of refuse-derived fuel and secondary solid fuel is described in G. Cuperus, 2015, The Difference Between RDF and SRF, RESOURCE, https://resource.co/article/difference-between-rdf-and-srf-10156).

Within the meaning of the present invention, gasification means the process that converts carbon-rich material in gaseous mixtures consisting of carbon monoxide, hydrogen and other gaseous compounds.

With the meaning of the present invention, hydrogasification means the gasification process carried out in a hydrogen-only atmosphere and in the absence of air, water and oxygen.

Within the meaning of the present invention, electrolysis means the process in which the passage of electric current causes water to breakdown into gaseous oxygen and hydrogen.

Within the meaning of the present invention, electrolytic cell means the electrochemical cell that allows to convert electric energy into chemical energy.

A reactor can be any container designed, according to the prior art and thanks to the common knowledge of the person skilled in the art, for the execution of a determined chemical reaction.

A tank can be any container adapted to store the gases and the liquids produced, designed according to the prior art and thanks to the common knowledge of the person skilled in the art.

A source of electrical power can be any device known in the art that can be selected by the person skilled in the art using his/her common knowledge, for supplying electrical power in direct or alternate current as needed.

Within the meaning of the present invention, the term water-gas shift reaction means the wgs reaction, CO + H₂O → CO₂ + H₂.

A vaporizer can be any device known in the art that can be selected by the person skilled in the art using his/her common knowledge, which vaporizes water.

Within the meaning of the present invention, Sabatier reaction means the chemical reaction in which carbon dioxide reacts with hydrogen, producing methane and water: CO₂ + 4H₂ → CH₄ + 2H₂O.

Within the meaning of the present invention, separation means to separate hydrogen from carbon dioxide and from other gases.

Within the meaning of the present invention, partial oxidation means the reaction in which a fuel-air or fuel-oxygen mixture is partially burned to form a gas rich in carbon oxide.

### Detailed description

The present invention describes a process of hydrogasification, which, thanks to the use of hydrogen only in the gasification of carbon from refuse-derived fuel allows to exclude the formation of dioxins.

In its basic configuration, the method comprises the production of methane from carbon from refuse-derived fuel and water by the steps of:
a) electrolysis of water to form hydrogen and oxygen;
b) hydro-gasification of carbon from refuse-derived fuel in the presence of hydrogen only, without adding air and/or oxygen and/or water, to obtain methane,
conducted at a pressure comprised between 1 and 50 bar and a temperature comprised between 300 and 500 °C.
In step b) the hydrogasification reaction is carried out in an atmosphere of hydrogen only, because neither air nor oxygen nor water are added.
The source of carbon is exclusively refuse-derived fuel.
In its basic configuration, the method may alternatively provide for step a), in which the hydrogen necessary for the subsequent hydrogasification is produced by electrolysis, to be replaced by step a') in which hydrogen is produced from carbon coming from organic compounds by a reforming reaction in the presence of water vapour and/or by a partial oxidation reaction in the presence of oxygen or air in combination with a water-gas shift reaction.

The process in step b) is conducted at a pressure comprised between 5 and 10 bar and a temperature comprised between 300 and 350 °C.
As an example, the aforesaid method can be carried out in a plant, not being object of the present invention, that in its basic configuration comprises, with reference to the accompanying figures:
at least one electrolytic cell 2, where electrolysis of water to obtain hydrogen and oxygen occurs, wherein said electrolytic cell is provided with at least one source of electric power 3, has at least one inlet for water 4, has at least one outlet for oxygen 5, is connected by transfer means for hydrogen 6 to at least one reactor for hydrogasification 7, where the hydrogasification of carbon from refuse-derived fuel in the presence of hydrogen occurs, obtaining methane wherein said reactor for hydrogasification 7 has at least one inlet for carbon from refuse-derived fuel 8 and at least one outlet for methane 9, and optionally comprises at least one storage tank for oxygen 10, at least one storage tank for methane 11, connected to the related outlets.

Otherwise when hydrogen, instead of hydrolysis, is produced by a reforming reaction in the presence of water vapour and/or by a partial oxidation reaction in the presence of oxygen or air in combination with a water-gas shift reaction, in the plant the electrolytic cell 2 with the source of electrical power 3, the water inlet 4, the outlet for oxygen 5 and the storage tank for oxygen 10 are replaced by a reactor for the production of hydrogen by reforming and/or partial oxidation and water-gas shift reaction 32 provided with at least one inlet for carbon from organic compounds 33, at least one inlet for O₂ or air 34, at least one inlet for water 35 and at least one outlet for carbon dioxide 36.

Hydrogen is produced by water hydrolysis through the reaction:

H₂O ⇔ H₂ + 0.5 O₂

ΔH298K = 241.86 kJ mol⁻¹

The hydrogasification reaction of the carbon from the refuse-derived fuel is the following:

C + 2 H₂ ⇔ CH₄

ΔH298K = -74.87 kJ mol⁻¹

With reference to the stoichiometry of the above reactions and considering the use of one mole of carbon, this process from the electrolysis of two moles of water produces one mole of methane and one of oxygen.

Hydrogen is produced by reforming and/or partial oxidation of carbon (C) originating from organic compounds, for example fossil fuels, biomasses, etc. Steam reforming produces synthesis gas (mixture of CO and H₂) through an endothermic process in which the carbon of the organic matrix (C) reacts with water vapour:

C + H₂O → CO + H₂

ΔH298K = 131.00 kJ mol⁻¹

CO is converted into CO₂ producing additional hydrogen through the water-gas shift reaction, which is a weakly exothermic process:

H₂O + CO ⇔ H₂ + CO₂

ΔH298K = -41.10 kJ mol⁻¹

In this case the overall process is still endothermic:

C + 2H₂O → CO₂ + 2H₂

ΔH298K = 89.90 kJ mol⁻¹

Partial oxidation produces CO through an exothermic process in which the carbon of the organic matrix (C) reacts with oxygen according to the reaction:

C + 0.5 O₂ ⇔ CO

ΔH298K = -110.54 kJ mol⁻¹

And hence through the water-gas shift reaction CO is converted into CO₂ producing additional hydrogen in a process that is exothermic overall:

C + 0.5 O₂ + H₂O → CO₂ + H₂

ΔH298K = -151.64 kJ mol⁻¹

The above reactions for producing hydrogen by reforming and/or partial oxidation can be combined with each other to modulate the quantity of heat necessary for the process which overall can be endothermic or exothermic or autothermic. Specifically, the gaseous flow produced is treated to separate the hydrogen which is then used in the hydrogasification reaction of the carbon of the refuse-derived fuel:

C + 2H₂ ⇔ CH₄

ΔH298K = -74.87 kJ mol⁻¹

In an alternative, the basic configuration can be modified to reduce electrical power consumption and directly use the oxygen produced by electrolysis. In the basic process, the oxygen produced has high quality, i.e. purity above 99%, and large quantity, because the basic process produces the same quantity of oxygen and methane.

In one alternative, the process comprises the following steps in addition to steps a) and b):
c) Partial combustion of carbon from refuse-derived fuel, in the presence of oxygen to produce carbon monoxide;
d) carbon monoxide product of step c) undergoes to water-gas shift reaction to form hydrogen and carbon dioxide;
wherein the hydrogen obtained in step d) can be partially or totally recycled in step b).

As an example in the related plant, not being object of the invention, in addition to the basic configuration further comprise at least one combustion chamber 12 for the partial combustion of carbon from refuse-derived fuel in the presence of oxygen to form carbon monoxide and at least one water-gas shift (WGS) 13, in which the combustion chamber 12 is connected to the electrolytic cell 2 by the outlet for oxygen 5 and having at least one inlet for carbon from refuse-derived fuel 14, connection means for carbon monoxide 15 between the combustion chamber 12 and the reactor WGS 13, in which the reactor WGS has at least one inlet for water 16, optionally provided with vaporizer 17, at least one outlet for carbon dioxide and hydrogen 18 connected with at least one separation means 19, in which the separation means has connection means 20 with the hydrogasification reactor for the passage of hydrogen, and at least one outlet for carbon dioxide 21.

Specifically, the basic process is modified introducing the partial combustion of a portion of the carbon present in the refuse-derived fuel to produce CO, and the water-gas shift (WGS) reaction to produce a part of the hydrogen necessary for hydrogasification of the carbon present in the refuse-derived fuel.

Therefore, the electrolysis of 0.5 moles of water is carried out. The oxygen produced by electrolysis is used for the partial oxidation of the carbon present in the refuse-derived fuel:

C + 0.5 O₂ ⇔ CO

ΔH298K = -110.54 kJ mol⁻¹

The carbon oxide thus produced is used to produce carbon dioxide and hydrogen through the water-gas shift reaction:

H₂O + CO ⇔ H₂ + CO₂

ΔH298K = -41.10 kJ mol-1

The hydrogen (1 mole) originating from the water-gas shift reaction is separated from carbon dioxide through widely used, well proven processes (pressure swing adoption (PSA), membranes, etc.) and hence it produces 0.25 other methane moles by hydrogasification of the carbon present in the refuse-derived fuel. Therefore, the reaction scheme referred to the treatment of one mole of carbon is:

| | |
|---|---|
| 0.5 H₂O(g) = 0.5 H₂(g) + 0.25 O₂(g) | ΔH298K = 120.93 kJ mol⁻¹ |
| 0.25 C(s) + 0.5 H₂(g) = 0.25 CH₄(g) | ΔH298K = -18.72 kJ mol⁻¹ |
| 0.5 C(s) + 0.25 O₂(g) = 0.5 CO(g) | ΔH298K = -55.27 kJ mol⁻¹ |
| 0.5 CO(g) + 0.5 H₂O(g) = 0.5 CO₂(g) + 0.5 H₂(g) | ΔH298K = -20.55 kJ mol⁻¹ |
| 0.25 C(s) + 0.5 H₂(g) = 0.25 CH₄(g) | ΔH298K = -18.72 kJ mol⁻¹ |
| C + H₂O ⇔ 0.5 CH₄ + 0.5 CO₂ | ΔH298K = 7.67 kJ mol⁻¹ |

Considering, in this case as well, the use of a mole of carbon, from the electrolysis of 0.5 moles of water are produced 0.5 moles of methane and 0.5 moles of carbon dioxide are obtained as a by-product.

In an additional alternative, the process comprises in addition to steps a) and b), the further step e) in which oxy-combustion of carbon from refuse-derived fuel takes place with the oxygen produced in step a) to obtain carbon dioxide.

For example, the aforesaid process can be carried out in a plant, not being object of the present invention, that further comprises at least one reactor for oxy-combustion 20 provided with at least one inlet for carbon from refuse-derived fuel 21 and connected to the electrolytic cell 2 by the inlet 5 from which oxygen is introduced, at least one outlet of the carbon dioxide 22.

In this variant, the oxygen produced by electrolysis is used for the oxy-combustion of the carbon present in the refuse-derived fuel:

C + O₂ ⇔ CO₂

ΔH298K = -353.90 kJ mol⁻¹

This strongly exothermic process allows to reach high temperatures and hence high yields when it is used in thermoelectric plants for the generation of electricity. Moreover, the reaction product of oxy-combustion consists only of carbon dioxide and thus the release of other pollutants such as nitrogen oxides is avoided. In this way, the possible segregation of carbon dioxide does not require separation from the other gases as in combustion with air, consequently it is easier and more economical to apply the carbon capture and storage (CCS) processes that will be necessary to comply with future environmental regulations.

The reaction scheme referred to the treatment of one mole of carbon in this case is:

| | |
|---|---|
| H₂O(g) = H₂(g) + 0.5 O₂(g) | ΔH298K = 241.86 kJ mol⁻¹ |
| 0.5 C(s) + H₂(g) = 0.5 CH₄(g) | ΔH298K = -37.44 kJ mol⁻¹ |
| 0.5 C(s) + 0.5 O₂(g) = 0.5 CO₂(g) | ΔH298K = -196.75 kJ mol⁻¹ |
| C + H₂O ⇔ 0.5 CH₄ + 0.5 CO₂ | ΔH298K = 7.67 kJ mol⁻¹ |

The overall process is the same as the preceding alternatives, however in this case for 1 mole of carbon, the electrolysis of 1 mole of water is necessary, while 0.5 moles of methane are also produced, as well as 0.5 moles of carbon dioxide as a by-product. In particular, in this case by the combustion reaction of the carbon present in refuse-derived fuel with oxygen (oxy-combustion) electricity is produced (with high efficiency) which can partially cover the demands for electricity of electrolysis.

In an additional alternative, the carbon dioxide produced in step e) reacts in step f) with hydrogen produced in step a) to obtain methane and water by the Sabatier reaction.

For example, the plant 1, not being object of the present invention, can be implemented introducing an additional reactor 23 in which the Sabatier reaction takes place is coupled by the outlet 22 with the oxy-combustion reactor 20 for the passage of carbon dioxide and connected by means for supplying the hydrogen 24 with an additional electrolytic cell 25 and provided with at least one outlet of the methane produced 26 optionally coupled with a storage tank for the methane 11, in which the additional electrolytic cell 25 is provided with an inlet for water 27, a source of electrical power 28 and an outlet for the oxygen 29 optionally coupled with a storage tank for oxygen 30.

Alternatively, the reactor in which the Sabatier reaction 23 instead of being connected with the additional electrolytic cell 25 is connected with the electrolytic cell 2 by means for supplying the hydrogen 31.

Then, in addition to the combination with oxy-combustion, the carbon dioxide coming from oxy-combustion can be converted into methane, with additional hydrogen produced by electrolysis, through the Sabatier reaction.

The oxygen produced by electrolysis is used for the oxy-combustion of a first quantity of carbon present in the refuse-derived fuel:

C + O₂ ⇔ CO₂

ΔH298K = -353.90 kJ mol⁻¹

In this case from the electrolysis of a first quantity of water (1 mole), hydrogen is obtained which is used for the gasification of the carbon present in the refuse-derived fuel, and oxygen which together with other carbon from refuse-derived fuel is used in an oxy-combustion reaction. Hence, the hydrogen produced by the electrolysis of a second quantity of water (2 moles) is made to react with the carbon dioxide coming from oxy-combustion which produces additional methane according to the Sabatier reaction:

CO₂(g) + 4H₂(g) = CH₄(g) + 2H₂O

ΔH298K = -165.08 kJ mol⁻¹

The reaction scheme referred to the treatment of one mole of carbon in this case is:

| | |
|---|---|
| H₂O(g) = H₂(g) + 0.5 O₂(g) | ΔH298K = 241.86 kJ mol⁻¹ |
| 0.5 C(s) + H₂(g) = 0.5 CH₄ (g) | ΔH298K = -37.44 kJ mol⁻¹ |
| 0.5 C(s) + 0.5 O₂(g) = 0.5 CO₂(g) | ΔH298K = -196.75 kJ mol⁻¹ |
| 2 H₂O(g) = 2 H₂(g) + O₂(g) | ΔH298K = 483.71 kJ mol⁻¹ |
| 0.5 CO₂(g) + 2 H₂(g) = 0.5 CH₄(g) + H₂O | ΔH298K = -82.54 kJ mol⁻¹ |
| C + 2H₂O ⇔ CH₄ + O₂ | ΔH298K = 408.84 kJ mol⁻¹ |

The overall process is the same as the basic process, however in this case for 1 mole of carbon, the electrolysis of 3 moles of water is necessary, while 1 mole of methane and 1 mole of oxygen are also produced. In this case, too, by the combustion reaction of the carbon present in refuse-derived fuel with oxygen (oxy-combustion) electricity is produced (with high efficiency) which can partially cover the demands for electricity of electrolysis.

For example, in the plant, not being object of the present invention, the connection means and the inlets and outlets can be provided with valves.

All reactions can be carried out in the presence of a catalyst, when necessary, which can be selected from those known in the art by the person skilled in the art on the basis of his/her common knowledge.

### Examples

The effectiveness of the basic hydrogasification process was verified through simulation with the AsTher version 7.12 code. The compositions of the products of the hydrogasification reactions of refuse-derived fuel with hydrogen were calculated in conditions of thermodynamic equilibrium using all compounds present in the database of the software. The input composition of the reagents was considered starting from the values of Table 1 assuming that in the refuse-derived fuel oxygen, nitrogen, sulphur and chlorine are bonded with hydrogen to form H₂O, NH₃, H₂S and HCl, respectively.

Assuming that 1 t of refuse-derived fuel is treated with 143.3 kg of hydrogen (supply H/C ratio of 3.11), two parametric analyses were carried out:
- effect of temperature: pressure of 10 bar and temperature in the 300-500°C range,
- effect of pressure: temperature of 300°C and pressure in the 1-50 bar range.

The results of the simulation analyses highlighted the formation of a gaseous flow consisting mainly of methane with minor quantities of C₂H₆, CO, CO₂, H₂, H₂S, HCl, N₂ and NH₃ in addition to water.

The methane yield (weight percentage) is calculated as the ratio between the methane produced per tonne of refuse-derived fuel.

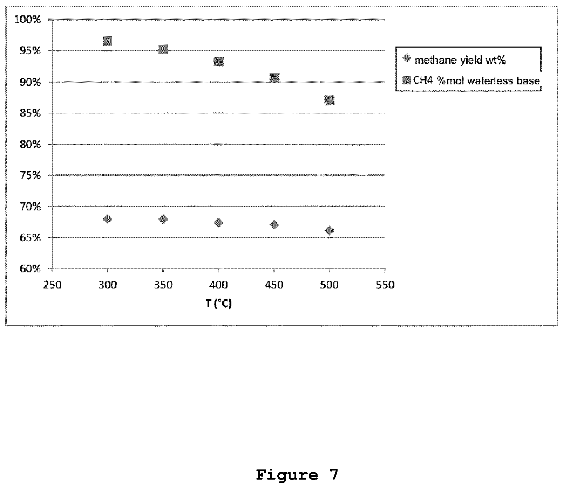

The methane yield and hence the methane concentration in the gaseous mixture produced operating at 10 bar decrease with temperature. At 300°C the maximum value of methane yield is reached, corresponding to approximately 68% by weight (680 kg of methane produced per tonne of refuse-derived fuel), as shown in Figure 7.

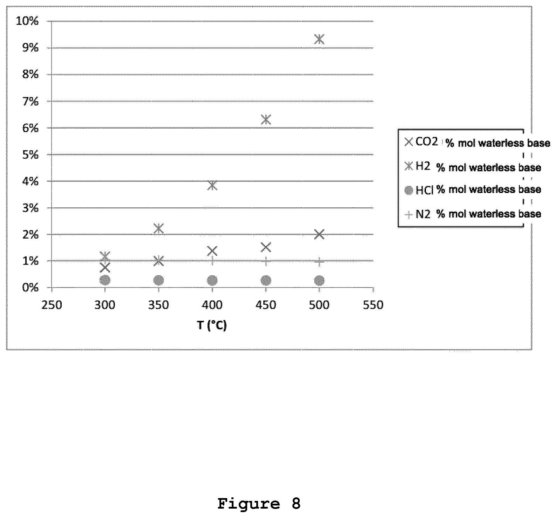

Figure 8 shows the concentration versus temperature of the most significant reaction product in addition to methane. Ethane and CO are absent or present in negligible quantities, whereas hydrogen concentration grows with temperature reaching the value of approximately 9% at 500°C.

Table 2 below shows the concentration (molar %) of the flow of the reaction products on water-less base operating at 10 bar.

**Table 2**

| T | C₂H₆ | CH₄ | CO | CO₂ | H₂ | H₂S | HCl | N₂ | NH₃ |
|---|---|---|---|---|---|---|---|---|---|
| °C | % mol | % mol | % mol | % mol | % mol | % mol | % mol | % mol | % mol |
| 300 | 0.00 | 96.54 | 0.00 | 0.75 | 1.16 | 0.18 | 0.28 | 1.04 | 0.06 |
| 350 | 0.00 | 95.24 | 0.00 | 0.99 | 2.22 | 0.17 | 0.27 | 1.03 | 0.06 |
| 400 | 0.01 | 93.25 | 0.01 | 1.37 | 3.85 | 0.17 | 0.27 | 1.01 | 0.07 |
| 450 | 0.01 | 90.64 | 0.03 | 1.52 | 6.32 | 0.17 | 0.26 | 0.98 | 0.08 |
| 500 | 0.01 | 87.10 | 0.09 | 2.01 | 9.33 | 0.16 | 0.26 | 0.96 | 0.08 |

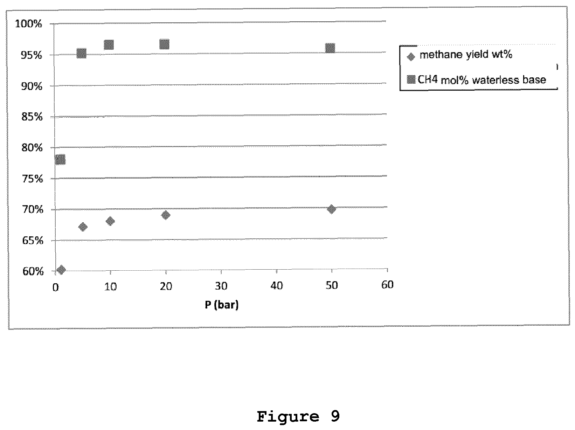

The result of the parametric analysis that considered the effect of pressure are shown in Figure 9 that shows a peak of methane concentration (approximately 96% by weight) around 10 bar, while methane yield always grows with pressure reaching the value of approximately 70% at 50 bar.

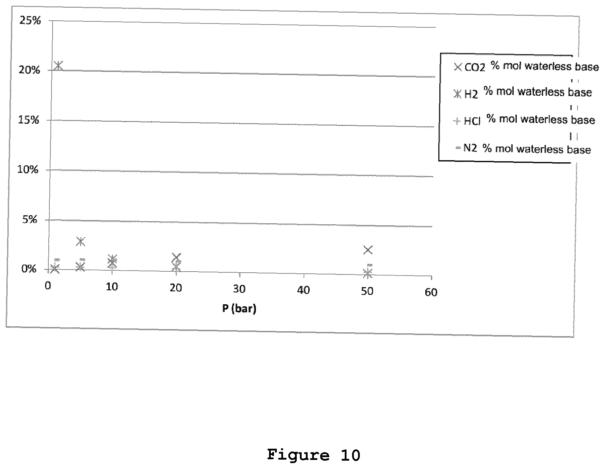

The concentration of the flow of reaction products on water-less base for the case in question is shown in Table 3, while Figure 10 shows the concentration of the most significant ones in addition to methane versus pressure. In this case, too, some gases (ethane, CO and ammonia) are absent or present in negligible quantities, while hydrogen concentration decreases with pressure. The concentration of CO₂ grows with pressure up to approximately 2.5% at 50 bar. Operating between 5 and 10 bar, hydrogen concentration changes from approximately 3% to 1%; these values of concentration of hydrogen in methane are tolerated in the distribution networks as well as in different applications (M. W. Melaina, O. Antonia, and M. Penev "Blending Hydrogen into Natural Gas Pipeline Networks: A Review of Key Issues", Technical Report NREL/TP-5600-51995 March 2013). In general, mixtures constituted by methane with smaller quantities of hydrogen and other impurities take the name of substitute natural gas (SNG).

**Table 3**

| P | C₂H₆ | CH₄ | CO | CO₂ | H₂ | H₂S | HCl | N₂ | NH₃ |
|---|---|---|---|---|---|---|---|---|---|
| bar | % mol | % mol | % mol | % mol | % mol | % mol | % mol | % mol | % mol |
| 1 | 0.00 | 78.05 | 0.00 | 0.05 | 20.49 | 0.16 | 0.25 | 0.96 | 0.04 |
| 5 | 0.00 | 95.23 | 0.00 | 0.30 | 2.92 | 0.18 | 0.27 | 1.04 | 0.06 |
| 10 | 0.00 | 96.54 | 0.00 | 0.75 | 1.16 | 0.18 | 0.28 | 1.04 | 0.06 |
| 20 | 0.01 | 96.57 | 0.00 | 1.41 | 0.48 | 0.17 | 0.27 | 1.03 | 0.06 |
| 50 | 0.02 | 95.77 | 0.00 | 2.55 | 0.16 | 0.17 | 0.26 | 1.00 | 0.07 |

On the basis of this analysis, the operating conditions for the processes of hydrogasification of refuse-derived fuel provide temperatures of approximately 300°C and operating pressures between 5 and 10 bar. These are moderate operating conditions, easily achievable in plant practice and characterised by low thermal dispersion. Around the pressures of 3-5 bar, methane yield is not maximum, however the gas produced contains hydrogen (approximately 1-3%) which is well tolerated for the most part of application while the CO₂ content is less than 0.3%. On the contrary, operating at higher pressures, higher methane yields are obtained, however the CO₂ content grows to the detriment of that of hydrogen, which is reduced nearly to zero at 50 bar.

## Claims

1. Process for the production of methane from carbon from refuse-derived fuel and water comprising the following steps:
a) Electrolysis of water to form hydrogen and oxygen;
b) Hydro-gasification of carbon from refuse-derived fuel in the presence of hydrogen only, without adding air and/or oxygen and/or water, to obtain methane conducted at a pressure comprised between 1 and 50 bar and a temperature comprised between 300 and 500 °C.

2. Process for the production of methane from carbon from refuse-derived fuel and water comprising the following steps:
a') production of hydrogen from carbon from organic compounds by reforming in the presence of water steam and/or partial oxidation in the presence of oxygen or air in combination with water-gas shift reaction;
b) Hydro-gasification of carbon from refuse-derived fuel in the presence of hydrogen only, without adding air and/or oxygen and/or water, to obtain methane conducted at a pressure comprised between 1 and 50 bar and a temperature comprised between 300 and 500 °C.

3. Process according to claim 1 or 2 comprising the following additional steps:
c) Partial combustion of carbon from refuse-derived fuel, in the presence of oxygen to carbon monoxide;
d) carbon monoxide product of step c) undergoes to water-gas shift reaction to form hydrogen and carbon dioxide;
wherein the hydrogen obtained in step d) can be partially or totally recycled in step b).

4. Process according to claim 1 or 2 comprising the additional step e) wherein carbon from refuse-derived fuel with oxygen obtained in step a) undergoes to oxy-combustion to produce carbon dioxide.

5. Process according to claim 4 comprising the additional step f) wherein carbon dioxide produced in step e) reacts with hydrogen produced in step a) to obtain methane and water by the Sabatier reaction.

## Patentansprüche

1. Verfahren zur Herstellung von Methan aus Kohle von aus Abfall gewonnenem Brennstoff und Wasser, die folgenden Schritte umfassend:
a) Elektrolyse von Wasser, um Wasserstoff und Sauerstoff zu bilden;
b) Hydrovergasung von Kohle von aus Abfall gewonnenem Brennstoff in Anwesenheit von ausschließlich Wasserstoff, ohne Hinzufügen von Luft und/oder Sauerstoff und/oder Wasser, um Methan zu erhalten, durchgeführt bei einem Druck, der zwischen 1 und 50 bar liegt, und einer Temperatur, die zwischen 300 und 500 °C liegt.

2. Verfahren zur Herstellung von Methan aus Kohle von aus Abfall gewonnenem Brennstoff und Wasser, die folgenden Schritte umfassend:
a') Herstellen von Wasserstoff aus Kohle aus organischen Verbindungen durch Reformieren in Anwesenheit von Wasserdampf und/oder partielle Oxidation in Anwesenheit von Sauerstoff oder Luft in Kombination mit der Wassergas-Shift-Reaktion;
b) Hydrovergasung von Kohle von aus Abfall gewonnenem Brennstoff in Anwesenheit von ausschließlich Wasserstoff, ohne Hinzufügen von Luft und/oder Sauerstoff und/oder Wasser, um Methan zu erhalten, durchgeführt bei einem Druck, der zwischen 1 und 50 bar liegt, und einer Temperatur, die zwischen 300 und 500 °C liegt.

3. Verfahren, gemäß Anspruch 1 oder 2, die folgenden zusätzlichen Schritte umfassend:
c) partielle Verbrennung von Kohle von aus Abfall gewonnenem Brennstoff zu Kohlenmonoxid, in Anwesenheit von Sauerstoff;
d) das Kohlenmonoxid-Produkt aus Schritt c) einer Wassergas-Shift-Reaktion unterworfen wird, um Wasserstoff und Kohlendioxid zu bilden;
worin der Wasserstoff, der in Schritt d) erhalten wurde, in Schritt b) teilweise oder vollständig recycelt werden kann.

4. Verfahren, gemäß Anspruch 1 oder 2, den zusätzlichen Schritt e) umfassend, worin Kohle von aus Abfall gewonnenenem Brennstoff mit Sauerstoff, der in Schritt a) erhalten wurde, einer Sauerstoffverbrennung unterworfen wird, um Kohlendioxid zu erzeugen.

5. Verfahren, gemäß Anspruch 4, den zusätzlichen Schritt f) umfassend, worin Kohlendioxid, das in Schritt e) erzeugt wurde, mit Wasserstoff reagiert, der in Schritt a) erzeugt wurde, um mittels der Sabatier-Reaktion Methan und Wasser zu erhalten.

## Revendications

1. Procédé pour la production de méthane à partir de carbone issu de combustible dérivé de déchets et d'eau comprenant les étapes suivantes :
a) l'électrolyse d'eau afin de former de l'hydrogène et de l'oxygène ;
b) l'hydro-gazéification de carbone issu de combustible dérivé de déchets en présence d'hydrogène uniquement, sans ajout d'air et/ou d'oxygène et/ou d'eau, afin d'obtenir du méthane réalisée à une pression comprise entre 1 et 50 bar et une température comprise entre 300 et 500 °C.

2. Procédé pour la production de méthane à partir de carbone issu de combustible dérivé de déchets et d'eau comprenant les étapes suivantes :
a') la production d'hydrogène à partir de carbone issu de composés organiques par reformage en présence de vapeur d'eau et/ou oxydation partielle en présence d'oxygène ou d'air en combinaison avec une réaction de conversion du gaz à l'eau ;
b) l'hydro-gazéification de carbone issu de combustible dérivé de déchets en présence d'hydrogène uniquement, sanas ajout d'air et/ou d'oxygène et/ou d'eau, afin d'obtenir du méthane réalisée à une pression comprise entre 1 et 50 bar et une température comprise entre 300 et 500 °C.

3. Procédé selon la revendication 1 ou 2 comprenant les étapes supplémentaires suivantes :
c) la combustion partielle de carbone issu de combustible dérivé de déchets, en présence d'oxygène en monoxyde de carbone ;
d) le produit monoxyde de carbone de l'étape c) subit une réaction de conversion du gaz à l'eau afin de former de l'hydrogène et du dioxyde de carbone ;
dans lequel l'hydrogène obtenu dans l'étape d) peut être partiellement ou totalement recyclé dans l'étape b).

4. Procédé selon la revendication 1 ou 2 comprenant l'étape supplémentaire e) dans laquelle du carbone issu de combustible dérivé de déchets avec de l'oxygène obtenu dans l'étape a) subit une oxy-combustion afin de produire du dioxyde de carbone.

5. Procédé selon la revendication 4 comprenant l'étape supplémentaire f) dans laquelle du dioxyde de carbone produit dans l'étape e) réagit avec de l'hydrogène produit dans l'étape a) afin d'obtenir du méthane et de l'eau par la réaction de Sabatier.
